# EUROPEAN PATENT APPLICATION

(11) **EP 1 541 631 A1**
(43) Date of publication of application: **15.06.2005**
(21) Application number: 02745827.2
(22) Date of filing: 04.07.2002
(51) Int. Cl.: C08L 67/02

(54) **THERMOPLASTIC POLYESTER RESIN COMPOSITION EXCELLENT IN PROCESSING STABILITY AND MOLDED ARTICLES THEREOF**

(71) Applicant: DAICEL CHEMICAL INDUSTRIES, Ltd., Sakai-shi, Osaka 590-0905 (JP)
(72) Inventor: OHTSUKA, Yoshihiro, Ohtake-shi, Hiroshima 739-0651 (JP)
(74) Representative: Grünecker, Kinkeldey, Stockmair & Schwanhäusser Anwaltssozietät
(86) International application number: PCT/JP2002/006792
(87) International publication number: WO 2004/005399

(57) **Abstract**

In a polyester resin composition according to the present invention, processing stability, resistances to hydrolysis and bleeding are improved by the addition of an epoxy compound having lactone chains to a thermoplastic polyester resin, and stability in melt molding and processing can be improved, generation of gas or odor can be improved, and improvements as for bleeding of stabilizers or the epoxy compound from a molded article allowed to stand at high temperature can be attained by virtue of its low volatile content.

## Description

### TECHNICAL FIELD

The present invention relates to a thermoplastic polyester resin composition prepared by combining an epoxy compound having lactone chains with a thermoplastic polyester resin, in which the composition has improved hydrolytic stability and melt viscosity stability.

### BACKGROUND ART

Linear polyester such as polyethylene terephthalate (PET) and polybutylene terephthalate (PBT) has been widely used for manufacturing products by molding methods such as injection molding. The polyester has many desirable properties including chemical stability, solvent resistance, and low gas permeability, and thus the polyester is an attractive material which can be adapted for the molding methods such as blow molding and injection molding.

One of problems, which arises upon the molding and processing of the polyester resin, relates to a melt viscosity of the polyester being relatively low. As a result, a shape of a molded article is not sufficiently retained in a period from a time point immediately after the molding to a time point before solidification. Another problem relates to inferior hydrolytic stability of the polyester.

Recently, various methods have been developed, which are used for augmenting the melt viscosity and a melt strength as well as enhancing the hydrolytic stability of such a polyester.

In US Patent No. 4,141,882, there is disclosed a method of obtaining polyester compositions having a high melt viscosity by mixing polyester containing at least 80 mol% ethylene terephthalate units with (1) an epoxy compound (A) of an isocyanuric acid structure and at least one organic compound (B) capable of reacting with the epoxy compound (A) or (2) a product obtained from a reaction under melting of the epoxy compound (A) and the organic compound (B).

UK Patent No. 2,098,231 discloses a molded article manufactured from polytetramethylene terephthalate stabilized using triglycidyl isocyanurate (TGIC) or bis(oxazoline).

US Patent No. 4,795,771 describes a polyester which is crystallized at low temperature, involves high heat distortion temperature, and has favorable dimension stability. The polyester composition includes polyester containing 80% polyethylene terephthalate, dicarboxylate ester of polyalkyleneglycol, an epoxy compound containing polyoxyalkylene, and an inorganic filler such as talc.

In US Patent No. 4,533,679, there is disclosed a reinforced polyester including a polyester resin, a polyepoxy compound having two or more epoxy functional groups, and a material for reinforcing.

In US Patent No. 4,020,122, there is disclosed a method of raising a melt elasticity and a melt viscosity of a linear polyester with high molecular weight. This method includes adding an organic polyepoxide having at least two epoxy groups per molecule to the polyester.

US Patent No. 4,933,429 discloses a method of manufacturing a branched polyester having a high melt viscosity. The branched polyester disclosed therein is manufactured by reacting (A) a polyester having free carboxyl groups at a substantial ratio, (B) a polyepoxy compound having preferably at least three epoxy functional groups, and (C) a catalyst selected from salts of aliphatic dicarboxylic acid and primary alkylamine.

In US Patent No. 4,246,378, a polyester having improved melt stability is also described. According to this, a composition including 100 parts by weight of polyester, 0.1 to 40 parts by weight of an epoxy compound, and 0.001 to 10 parts by weight of an organic sulfonate salt and an organic sulfate salt is manufactured.

US Patent No. 3,886,104 discloses a method of stabilizing a polyester resin by adding a stabilizer including internal polyfunctional epoxide having at least two epoxy functional groups to the polyester resin with high molecular weight. The epoxy group-containing stabilizer disclosed as useful one is an epoxidized poly-unsaturated triglyceride.

However, in the above-mentioned various polyester compositions, improvements regarding stability in melt molding and processing, generation of gas and odor, and bleeding of the stabilizer and the epoxy compound from a molded article allowed to stand at high temperature are not sufficient.

### DISCLOSURE OF THE INVENTION

The inventor of the present invention has found that the above-mentioned problems can be solved by combining a cycloaliphatic epoxy compound having lactone chains with a thermoplastic polyester resin, and completed the present invention.

That is, according to a first aspect of the present invention, there is provided a thermoplastic polyester resin composition comprising an epoxy compound (b) having lactone chains and a thermoplastic polyester resin (a).

According to a second aspect of the present invention, in the thermoplastic polyester resin composition according to the first aspect of the invention, the polyester resin (a) includes a unit derived from an aliphatic diol, cycloaliphatic diol or a mixture thereof, and an aromatic dicarboxylic acid.

According to a third aspect of the present invention, in the thermoplastic polyester resin composition according to the second aspect of the invention, the polyester resin (a) is a polyethylene terephthalate, a poly(1,4-butylene terephthalate), a poly(1,4-cyclohexanedimethanol terephthalate), or a mixture thereof.

According to a fourth aspect of the present invention, in the thermoplastic polyester resin composition according to any one of the first to third aspects of the invention, the polyester resin (a) includes the polyester resin (a) alone, a polyester resin (a') alone in which flexible segment units are included in a molecular chain of the thermoplastic polyester resin (a), or a mixture of the thermoplastic polyester resin (a) and the thermoplastic polyester resin (a').

According to a fifth aspect of the present invention, in the thermoplastic polyester resin composition according to the fourth aspect of the invention, the flexible segment unit is a unit derived from polyoxyalkyleneglycol, aliphatic hydroxycarboxylic acid, aliphatic dicarboxylic acid, or a mixture thereof.

According to a sixth aspect of the present invention, in the thermoplastic polyester resin composition according to any one of the first to fifth aspects of the invention, the epoxy compound (b) has a cycloaliphatic epoxy structure.

According to a seventh aspect of the present invention, in the thermoplastic polyester resin composition according to the sixth aspect of the invention, the epoxy compound (b) is used in a range of 0.1 to 3.5% by weight based on 100% by weight of the polyester resin (a).

According to an eighth aspect of the present invention, the thermoplastic polyester resin composition according to any one of the first to seventh aspects of the invention is characterized by further including a catalyst compound (c).

According to a ninth aspect of the present invention, in the thermoplastic polyester resin composition according to the eighth aspect of the invention, the catalyst compound (c) is a salt containing at least one of alkali metal cation, alkali earth metal cation and halogen ion and does not include a carbon-phosphorus bond.

According to a tenth aspect of the present invention, in the thermoplastic polyester resin composition according to the ninth aspect of the invention, the catalyst compound (c) is used in a range of 0.01 to 1% by weight based on 100% by weight of a sum of the polyester resin (a) and the epoxy compound (b).

According to an eleventh aspect of the present invention, there is provided a molded article which is obtained by molding the thermoplastic polyester resin composition according to any one of the first to tenth aspects of the invention.

### BEST MODE FOR CARRYING OUT THE INVENTION

The present invention is illustrated in detail below.

In the present invention, thermoplastic polyester resins (a) (also referred to as an ingredient (a)) are those generally derived from an aliphatic diol, a cycloaliphatic diol, an aliphatic diol including an aromatic ring(s) with 2 to about 10 carbon atoms or a mixture thereof, and at least one aromatic dicarboxylic acid.

In the present invention, the term "derived unit" means, for example, a structural unit originated in each raw material in a polyester obtained by reaction of diol and aromatic dicarboxylic acid which are the raw materials, and does not depend on kinds of the raw materials. Specifically, when the structural unit of the polyester obtained by reacting ethyleneglycol and terephthalic acid is given as an example, the raw materials may be ethyleneglycol, ethyleneglycol diacetate or ethylene oxide or the like and terephthalic acid, dimethyl terephthalate or terephthalic acid dichloride or the like. Therefore, various raw materials shown below also encompass derivatives for obtaining a skeleton based thereon.

Examples of aromatic dicarboxylic acids include isophthalic acid, terephthalic acid, 1,2-di(p-carboxyphenyl)ethane, and 4,4-dicarboxydiphenylether, and a mixture thereof, each of which has at least one aromatic ring. Further, a polycyclic acid such as 1,4- or 1,5-naphthalene dicarboxylic acid can be used. Preferable dicarboxylic acids include terephthalic acid and a mixture of terephthalic acid and isophthalic acid.

Examples of an aliphatic diol having 2 to about 10 carbon atoms include ethylene glycol, 1,2-propanediol, 1,3-propanediol, 1,3-butanediol, 1,4-butanediol, and 1,6-exanediol.

Examples of a cycloaliphatic diol having 2 to about 10 carbon atoms include a cis or trans isomer of 1,4-cyclohexane dimethanol and a mixture thereof (hereinafter, referred to as 1,4-cyclohexane dimethanol, because it is not necessary to discriminate isomers).

Examples of an aliphatic diol containing an aromatic ring having 2 to about 10 carbon atoms include 1,4-xylene dimethanol.

Preferable polyesters are derived from an aliphatic diol or a cycloaliphatic diol and an aromatic dicarboxylic acid. Most preferable polyesters include polyethylene terephthalate (for short PET), poly(1,4-butylene terephthalate) (for short PBT), and a mixture thereof.

In the present prevention, the thermoplastic polyester resin (a) may be a thermoplastic polyester resin (a) alone and a polyester resin (a') alone in which flexible segment units are included in a molecular chain of the thermoplastic polyester resin (a), or a mixture thereof.

A mixing ratio between the resin (a) and the resin (a') is not limited when a mixture of the thermoplastic polyester resin (a) and the polyester resin (a') is used.

Examples of the flexible segment unit in a molecular chain of the resin (a') include a unit derived from a polyoxyalkyleneglycol, an aliphatic hydroxycarboxylic acid, and an aliphatic dicarboxylic acid, or a mixture thereof.

Examples of the polyoxyalkyleneglycol include one containing an alkylene group having 1 to 4 carbon atoms, which may be also copolymers. Preferably, the polyoxyalkyleneglycol is a polyethyleneglycol. The number average molecular weight of the polyoxyalkyleneglycol is not particularly limited.

Examples of the aliphatic hydroxycarboxylic acid include an aliphatic hydroxycarboxylic acid having 1 to 12 carbon atoms, and a cyclomonoester and a cyclodimerester thereof. Specific examples thereof include glycolic acid, lactic acid, β-hydroxypropionic acid, γ-hydroxybutyric acid, and ε-hydroxycaproic acid. They may be also used as a mixture. Examples of the cyclomonoester include ε-caprolactone, α-methyl-ε-caprolactone, β-methyl-ε-caprolactone, γ-methyl-ε-caprolactone, β,δ-dimethyl-ε-caprolactone, 3,3,5-trimethyl-ε-caprolactone, β-propiolactone, β-butylolactone, γ-butylolactone, α,α-dimethyl-β-propiolactone, δ-valerolactone, β-methyl-δ-valerolactone, β-ethyl-δ-valerolactone, enantholactone, and dodecanolactone. They may be also used as a mixture. Examples of the cyclodimerester include glycolide and lactide. They may be also used as a mixture.

As aliphatic dicarboxylic acids, those described above are available and may be also used as a mixture.

A content ratio of the flexible segment units in the polyester resin (a') is not particularly limited.

The polyester resins (a') can be manufactured according to the methods described in US Patent Nos. 2,465,319 and 3,047,539, and those can be utilized.

A polyester derived from a cycloaliphatic diol and an aromatic dicarboxylic acid can be manufactured, for example, by polycondensation of 1,4-cyclohexane dimethanol with an aromatic dicarboxylic acid. Examples of the aromatic dicarboxylic acid include isophthalic acid, terephthalic acid, 1,2-di(p-carboxyphenyl)ethane, and 4,4-dicarboxydiphenylether, and a mixture thereof. All of those acids each have at least one aromatic ring. Further, a polycyclic acid such as 1,4- or 1,5-naphthalene dicarboxylic acid can be also used. Preferable dicarboxylic acids include terephthalic acid and a mixture of terephthalic acid and isophthalic acid.

Further, preferable polyesters of another type are obtained by a reaction of 1,4-cyclohexane dimethanol with a mixture of isophthalic acid and terephthalic acid.

Preferable polyesters of still another type are a copolyester derived from cyclohexane dimethanol, alkyleneglycol, and an aromatic dicarboxylic acid. To produce those copolyesters, for example, it has only to perform condensation of 1,4-cyclohexane dimethanol and alkyleneglycol with the aromatic dicarboxylic acid. A preferable copolyester of those can be produced by a reaction of 1,4-cyclohexane dimethanol, ethylene glycol, and terephthalic acid at a molar ratio of 1:2:3.

In the present invention, as mentioned above, it is also possible to use polymers where at least one of monomers contains the flexible segment units such as polyoxyethylene units or polyoxybutylene units. Such a polymer can be manufactured by mixing a compound such as dicarboxylic acid containing polyethyleneglycol, caprolactone or polyoxyalkylene segments in a polymerization reaction, and it is common that the polymer obtained in this way has a rubber-like elasticity. The polyester of this type can be obtained under the trade name of Hytrel (available from Du Pont-Tray Co., Ltd.) and Pelprene (available from Toyobo Co., Ltd.).

When a mixture of a PET and a PBT is used, the thermoplastic polyester resin (a) includes about 1 to about 99 parts by weight of the PET and about 99 to about 1 part by weight of the PBT based on 100 parts by weight of the mixture. Within the scope of the present invention, it is also possible to use the various polyesters described above and the mixtures thereof.

The ingredient (b) is an epoxy compound having lactone chains. The lactone chains facilitate a mixture with the ingredient (a) and enhances compatibility, resulting in reduction of bleed and volatility caused by aging at high temperature.

Such an epoxy compound can be a monofunctional, difunctional, trifunctional or polyfunctional epoxy compound. The most suitable ones are the monofunctional and difunctional epoxy compounds. Such epoxy compounds include bisphenol diglycidylether, epoxy novolak resins, polymers of unsaturated epoxide, and compounds obtained by epoxidation of diene or polyene, which have lactone chains in a molecular structure. The lactone chains may be present as a side chain of the molecule or may be present inside the molecule.

Examples of easily available epoxy compounds each containing lactone chains, which are commercially available, include: Placcel G series (a trade name, produced by Daicel Chemical Industries, Ltd., flexible epoxy resins each having a primary hydroxy group at a terminal group which are obtained by modifying secondary hydroxyl groups of kinds of epoxy resins of epibis type with caprolactone and have lactone chains as side chains); Celloxide 2080 series (a trade name, produced by Daicel Chemical Industries, Ltd., which are an ester of 3,4-epoxycyclohexyl methanol with 3,4-epoxycyclohexane carboxylic acid containing caprolactone units in the molecule, and molecular weight of the caprolactone units may be different from each other); and Epolead GT-300 series and Epolead GT-400 series (produced by Daicel Chemical Industries, Ltd., which are polyfunctional cycloaliphatic epoxy resins, and is an ester of an epoxidized or nonepoxidized polycarboxylic acid with 3,4-epoxy cyclohexyl methanol, and caprolactone units are introduced into the ester, and molecular weight of the caprolactone units may be different from each other).

The epoxy compound (b) having the lactone chains can be used at an arbitrary effective amount, and a suitable range of a use amount is about 0.1 to about 3.5%, preferably 0.2 to 3.0% by weight of the epoxy compound (b) based on 100% by weight of the polyester resin (a). In such a particularly suitable range of the use amount, it has been found that it is advantageous to use about 1 to about 1.5% by weight of a difunctional epoxy compound in a special composition.

The ingredient (c) of the present invention is a catalyst compound. The suitable catalyst compounds are salts containing at least one of alkali metal cation, alkali earth metal cation and halogen anion and not containing a carbon-phosphorus direct bond. It would be self-evident that numerous compounds are included in such a class. Such compounds include alkali metal halides, alkali metal carboxylates, alkali metal enolates, amine salts of halogenated hydroacid, alkali metal carbonates, and quaternary ammonium halides.

Specific examples thereof include lithium fluoride, lithium iodide, potassium bromide, potassium iodide, and sodium dihydrogen phosphate; and sodium acetate, sodium benzoate, sodium caproate, sodium stearate, sodium ascorbate, and dodecyl trimethyl ammonium bromide. Among them, alkali metal salt of stearic acid (preferably sodium stearate) has special advantages compared to the other catalyst compounds described in the present invention, and thus is preferable. First, the use of such a salt enables an extrusion of a polyester-difunctional epoxide composition at a substantially faster supplying speed than those when it is absent. Second, such a salt is substantially less likely to impart odor to the composition than other compounds (particularly amine) being useful as the catalyst.

The catalyst compound (c) is used in the range of about 0.01 to about 1% by weight, and preferably 0.05 to 1% by weight based on 100% by weight of the sum of the polyester resin (a) and the epoxy compound (b). When the use amount exceeds the above range or is insufficient, there is no effect on stabilization of melt viscosity and resistance to hydrolysis.

With the thermoplastic polyester resin composition of the present invention, if desired, an inorganic filler (d) generally combined in polyester resin may be combined, and can be selected from commercially available various fillers. Specific examples of such the fillers include barium sulfate, zinc oxide, calcium carbonate, mica, talc, asbestos, titanium oxide, clay, carbon, ceramic, titanates and mixtures thereof. The inorganic fillers can be added at an arbitrary amount.

Also, the thermoplastic polyester resin composition of the present invention can optionally contain a hindered phenol-based anti-oxidant. As the hindered phenol-based anti-oxidant, it is possible to use arbitrary hindered phenol known to those skilled in the art, and various hindered phenols are commercially available.

The hindered phenol is a compound having a phenolic OH group to undergo steric hindrance, especially a compound having a t-butyl group at an ortho position with respect to a phenolic OH group. A large number of such compounds can be exemplified. Preferable examples thereof include tetrakis(methylene-3-(3',5'-di-tert-butyl-4'-hydroxyphenyl)propionate)methane, octadecyl-3-(3',5'-di-tert-butyl-4'-hydroxyphenyl)propionate, 1,3,5-trimethyl-2,4,6-tris(3,5-di-tert-butyl-4-hydroxybenzyl)benzene, ethoxylated arylphenol ester, 2,2'-thiodiethylbis(3-(3,5-di-tert-butyl-4-hydroxyphenyl))propionate), and octadecyl-3,5-di-tert-butyl-4-hydroxyhydrocinnamate, and any mixture thereof. Most preferable examples include octadecyl-3,5-di-tert-butyl-4-hydroxyhydrocinnamate commercially available under the name of IRGANOX1076 and tetrakis(methylene-3-(3',5'-di-tert-butyl-4'-hydroxyphenyl)propionate)methane commercially available under the name of IRGANOX1010.

Further, the thermoplastic polyester resin composition of the present invention can optionally contain regular additives such as a dye, pigment, stabilizer, plasticizer, material for reinforcing, flame retardant, drip inhibitor at the time of burning, nucleation agent (also referred to as a crystal-nucleating agent), and rubber-based impact resistance modifier, and a mixture thereof.

Of the above flame retardants, a principal flame retardant generally contains a chemical element (e.g., bromine, chlorine, antimony, phosphorus, or nitrogen) used to obtain ability of imparting flame retardant property. It is to be noted that such the flame retardants preferably include halogenated (brominated or chlorinated) organic compounds, halogenated organic compounds added with phosphorus compounds, and compounds each containing a phosphorus-nitrogen bond, and mixtures thereof.

The use amount of the flame retardants is not important for the present invention so long as it is present at a small amount in the composition. The flame retardant at a large amount impairs physical property, but it is necessary to be present in amounts of sufficient to impart at least incombustibility and self-extinguishing property to the polyester resin. As is self-evident for those skilled in the art, the use amount of the flame retardant varies depending on properties of the resin and efficiency of the flame retardant. It is common that the use amount of the flame retardant is in the range of 0.5 to 50 parts by weight based on 100 parts by weight of the polyester resin (a).

For example, elemental red phosphorus is used in amounts of 0.5 to 2.0 parts by weight based on 100 parts by weight of the polyester resin (a). The phosphorous in a state of triphenyl phosphate is used in amounts of 25 parts by weight based on 100 parts by weight of the polyester resin (a). On the other hand, a halogenated aromatic compound is used in amounts of 8 to 12 parts by weight based on 100 parts by weight of the polyester resin (a), and a synergist such as antimony oxide is used in amounts of about 2 to about 5 parts by weight based on 100 parts by weight of the polyester resin (a).

The above drip inhibitor includes those including polytetrafluoroethylene resin, which are commercially available.

Concerning the above material for reinforcing, the most preferable material for reinforcing is a glass filler. It is preferred that such a glass filler be in the form of filamentous glass fibers or glass flakes. These materials are publicly known to those skilled in the art, and are widely available from various manufacturers. In the composition finally used for electric use, it is preferable to use glass filaments including lime-aluminum borosilicate glass with less sodium content. As is known to those skilled in the art, the smaller a filament diameter is, the more a strength of plastics is increased.

The thermoplastic polyester resin composition of the present invention can be manufactured according to various procedures.

As one example of manufacturing methods, pellets for molding are manufactured by putting the epoxy compound (b) having lactone chains together with the dried polyester resin (a) and the catalyst compound (c) into an extruder for mixing, then heating a mixture to high temperature (e.g., 160 to 300°C) and extruding it. At that time, the epoxy compound (b) is dispersed in the polyester resin (a) and the catalyst compound (c), so the melt viscosity is raised.

In another manufacturing method, the epoxy compound (b) is mixed with the polyester resin (a) and the catalyst compound (c) at ambient temperature, and subsequently, such a mixture is plasticized on a roller, heated, for example, to 160 to 300°C, cooled and then cut finely.

Also, a molded article can be directly manufactured by mixing the epoxy compound with the powdery or granular polyester resin and the catalyst compound and then heating such a mixture by use of an apparatus for mixing and molding.

In still another manufacturing method, it is also possible to mix the epoxy compound in a final step of a process for manufacturing the polyester resin.

Mixing must be performed with controlling the temperature precisely. It is preferred that the temperature be maintained to be lower than about 300°C. It is preferred that the mixing be continued until a homogenous mixture is obtained, which contains the polyester resin, the inorganic filler, the catalyst compound and the epoxy compound. As known to those skilled in the art, it is possible to impart the desired properties to the composition by adding the other additive as mentioned above during the mixing.

Then, various molded articles can be manufactured by molding the composition of the present invention. Preferably, products are manufactured by performing injection molding of such a composition, or various products are obtained by extruding such a composition into a sheet shape, followed by thermally molding. Such a composition is also suitable for use in blow extrusion and molding which require higher melt strength than that in the general methods, and the other known methods.

### EXAMPLES

Hereinafter, the present invention is specifically illustrated based on examples, but the present invention is not limited thereto.

It is to be noted that evaluation methods, test methods and the like of various physical properties are as follows. Measurement (1): Stability of torque behavior at melt-kneading A sample (50 g) was prepared to obtain combination ingredient ratios in Table 1, and torque behavior was observed using Labo Plasto Mill (produced by Toyo Seiki Co., Ltd.) at 100 rpm at temperature not less than a melting point of each resin [250°C for PBT, 280°C for PET (1), 220°C for PET (2), 230°C for TPEE]. Stability of melt-kneading behavior was evaluated by a ratio of a torque value after 15 minutes to a torque value after 3 minutes from the start of melt-kneading. This value indicates that the closer to 1 it is, the more stable the behavior is.

### Measurement (2): Weight reduction rate

Using Tg-DTA (produced by Seiko Electronics Co., Ltd.), under a nitrogen gas flow at 30 ml/min, the temperature was raised from 30°C to 350°C at a temperature rise speed of 10°C/min, and weight reduction rates at 200°C and 250°C are shown. When this value is 0%, it indicates that there is no ingredient which vaporizes from the composition and the composition is stable.

### Measurement (3): Hydrolysis retention rate

A test piece for a tensile test was made according to ASTM D638, and stored in hot water at 80°C for one month. The test piece was taken out and was left to stand at 23°C at humidity of 60% for one week, and subsequently the tensile test was performed. A retention rate was calculated on the basis of tensile elongation of a test piece which was not stored in hot water at 80°C. The retention rate indicates that the closer to 100% it is, the more the hydrolysis can be prevented.

### Measurement (4): Surface stickiness due to aging

A test piece made according to ASTM D638 was left to stand in an oven at 150°C for 3 hours, and subsequently hand feeling of surface stickiness was measured.

○: No stickiness, x: Sticky

Polyester-based resins and epoxy compounds used in Examples and Comparative Examples are shown below.
(a) Polyester-based resins
   Polybutylene terephthalate (PBT): Duranex 600FP (produced by Polyplastics Co., Ltd.)
   Polyester-based thermoplastic elastomer (TPEE): Pelprene S1002 (produced by Toyobo Co., ltd.)
   Polyethylene terephthalate [PET (1)]: TR8550 (produced by Teijin Ltd.)
   Polyethylene terephthalate [PET (2)]: GN071 (produced by Eastman Co.)
(b) Epoxy compounds having lactone chains
   Celloxide 2081 (produced by Daicel Chemical Industries Ltd., one where one mol of caprolactone is added to Celloxide 2021P below, epoxy equivalent 210, viscosity 340 cP/25°C)
   Placcel GL62 (produced by Daicel Chemical Industries Ltd., epoxy equivalent 230, viscosity 7000 cP/25°C)
   Epolead GT302 (produced by Daicel Chemical Industries Ltd., epoxy equivalent 240, viscosity 300 cP/25°C) Epoxy compounds having no lactone chains for Comparative Examples
   Celloxide 2021P (produced by Daicel Chemical Industries Ltd., ester of 3,4-epoxycyclohexyl methanol and 3,4-epoxycyclohexane carboxylic acid, epoxy equivalent 135, viscosity 280 cP/measurement temperature of 25°C)
   Epikote 828 (produced by Yuka Shell Epoxy Co.Ltd., epoxy equivalent 190, viscosity 130 P/25°C)

### Examples 1 to 9 and Comparative Examples 1 to 5

Respective ingredients shown in Tables 1 and 2 were rotated and mixed in a tumbler, and then melt-kneading was performed using a single screw extruder of 30 mm to yield a pellet-shaped composition (screw rotation frequency of 100 rpm). A test piece was made by drying this composition at temperature of 80°C to 140°C for 8 hours and performing injection molding.

For comparison, the composition to which the epoxy compound having no lactone chains was added as shown in Table 3 was also prepared.

Combination compositions and evaluation results of the test pieces are shown in Tables 1 to 3 described below.

As is obvious from the results of Examples 1 to 9, in the polyester resin composition of the present invention, it is shown that there can be obtained a polyester resin composition where a processing stability at high temperature is excellent, i.e., a variation of fluidity is low, resistance to hydrolysis is excellent and further a volatile content is small. On the contrary, in the epoxy compound applied as a conventional stabilizer for polyester resins, fluid behavior is worse and volatile content is large, and thus the polyester-based resin composition well-balanced could not be obtained in terms of the improvement of resistance to hydrolysis and the like.

**Table 1**

| Composition | Example 1 | Example 2 | Example 3 | Example 4 | Example 5 |
|---|---|---|---|---|---|
| PBT | 98 | | | | |
| TPEE | | 98 | | | |
| PET (1) | | | 98 | | |
| PET (2) | | | | 98 | 98 |
| Celloxide 2081 | 2 | 2 | 2 | 2 | |
| Placcel GL62 | | | | | 2 |
| Epolead GT302 | | | | | |
| Celloxide 2021P | | | | | |
| Epikote 828 | | | | | |
| IRGANOX 1010 | 0.1 | 0.1 | 0.1 | 0.1 | 0.1 |
| Sodium stearate | | | | | |
| Dodecyl trimethyl | | | 0.1 | | |
| ammonium bromide | | | | | |
| Measurement (1) | 1.1 | 1.1 | 1.2 | 1.1 | 1.2 |
| Measurement(2)200°C | 0.01 | 0.02 | 0.01 | 0.02 | 0.04 |
| 250°C | 0.06 | 0.07 | 0.02 | 0.06 | 0.09 |
| Measurement (3) % | 85 | 83 | 84 | 88 | 80 |
| Measurement (4) | ○ | ○ | ○ | ○ | ○ |

**Table 2**

| Composition | Example 6 | Example 7 | Example 8 | Example 9 |
|---|---|---|---|---|
| PBT | 98 | 98 | | |
| TPEE | | | | |
| PET (1) | | | | |
| PET (2) | | | 98 | 98 |
| Celloxide 2081 | | | | 1 |
| Placcel GL62 | 2 | | | 1 |
| Epolead GT302 | | 2 | 2 | |
| Celloxide 2021P | | | | |
| Epikote 828 | | | | |
| IRGANOX 1010 | 0.1 | 0.1 | 0.1 | 0.1 |
| Sodium stearate | | | 0.1 | |
| Dodecyl trimethyl | 0.1 | | | |
| ammonium bromide | | | | |
| Measurement (1) | 1.2 | 1.1 | 1.1 | 1.2 |
| Measurement(2)200°C | 0.08 | 0.03 | 0.02 | 0.02 |
| 250°C | 0.11 | 0.08 | 0.05 | 0.03 |
| Measurement (3) % | 81 | 78 | 79 | 89 |
| Measurement (4) | ○ | ○ | ○ | ○ |

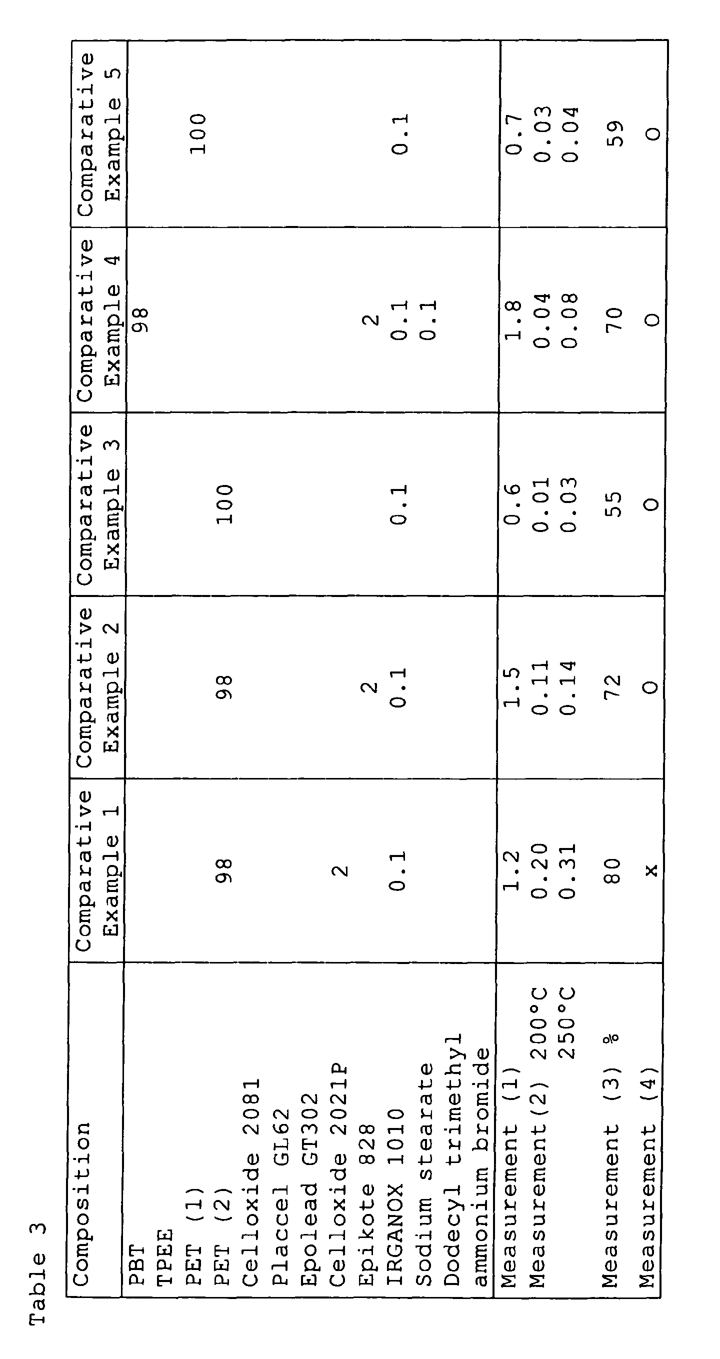

### INDUSTRIAL APPLICABILITY

The thermoplastic polyester resin composition of the present invention is improved in stability in melt molding and processing and is improved in generation of gas or odor and bleeding of stabilizers or the epoxy compound from a molded article allowed to stand at high temperature, and products are manufactured by injection molding, or various products are obtained by extruding such a composition into sheet shapes, followed by thermally molding. Such a composition is also suitable for use in blow extrusion and molding which require higher melt strength than that in the general methods, and the other publicly known methods.

## Claims

1. A thermoplastic polyester resin composition comprising an epoxy compound (b) having lactone chains and a thermoplastic polyester resin (a).

2. The thermoplastic polyester resin composition according to claim 1, wherein the thermoplastic polyester resin (a) comprises a unit derived from an aliphatic diol, a cycloaliphatic diol or a mixture thereof, and an aromatic dicarboxylic acid.

3. The thermoplastic polyester resin composition according to claim 2, wherein the thermoplastic polyester resin (a) comprises a polyethylene terephthalate, a poly(1,4-butylene terephthalate), a poly(1,4-cyclohexanedimethanol terephthalate), or a mixture thereof.

4. The thermoplastic polyester resin composition according to any one of claims 1 to 3, wherein the thermoplastic polyester resin (a) comprises the thermoplastic polyester resin (a) alone, a thermoplastic polyester resin (a') alone in which flexible segment units are included in a molecular chain of the thermoplastic polyester resin (a), or a mixture of the thermoplastic polyester resin (a) and the thermoplastic polyester resin (a').

5. The thermoplastic polyester resin composition according to claim 4, wherein the flexible segment unit comprises a unit derived from a polyoxyalkyleneglycol, an aliphatic hydroxycarboxylic acid, an aliphatic dicarboxylic acid, or a mixture thereof.

6. The thermoplastic polyester resin composition according to any one of claims 1 to 5, wherein the epoxy compound (b) has a cycloaliphatic epoxy structure.

7. The thermoplastic polyester resin composition according to claim 6, wherein the epoxy compound (b) is used in a range of 0.1 to 3.5% by weight based on 100% by weight of the thermoplastic polyester resin (a).

8. The thermoplastic polyester resin composition according to any one of claims 1 to 7, **characterized by** further comprising a catalyst compound (c).

9. The thermoplastic polyester resin composition according to claim 8, wherein the catalyst compound (c) comprises a salt containing at least one of an alkali metal ion, an alkali earth metal cation, and a halogen ion and does not include a carbon-phosphorus bond.

10. The thermoplastic polyester resin composition according to claim 9, wherein the catalyst compound (c) is used in a range of 0.01 to 1% by weight based on 100% by weight of a sum of the thermoplastic polyester resin (a) and the epoxy compound (b).

11. A molded article, which is obtained by molding the thermoplastic polyester resin composition according to any one of claims 1 to 10.
